# EUROPÄISCHE PATENTANMELDUNG

(11) **EP 1 122 148 A1**
(43) Veröffentlichungstag der Anmeldung: **08.08.2001**
(21) Anmeldenummer: 00119724.3
(22) Anmeldetag: 09.09.2000
(51) Int. Cl.: B62B 9/28

(54) **Kinderkarre**

(30) Priorität: 01.02.2000 DE 20001750 U
(71) Anmelder: Wiesinger, Ilke, 30559 Hannover (DE)
(72) Erfinder: Wiesinger, Ilke, 30559 Hannover (DE)
(74) Vertreter: König, Norbert, Dipl.-Phys. Dr.

(57) **Zusammenfassung**

Eine Kinderkarre weist einen mit Rädern versehenen Rahmen und einem Schiebegestänge auf. Auf dem Rahmen (6) ist eine Standfläche (15) für Kinder angeordnet. Am Rahmen ist ein Haltegestänge für ein auf der Standfläche (15) stehendes Kind vorgesehenes, an dem das Schiebegestänge (41) befestigt ist.

## Beschreibung

Die Erfindung betrifft eine Kinderkarre gemäß Oberbegriff des Anspruchs 1.

Es sind Kinderkarren bekannt, in denen die Kinder sitzend oder liegend gefahren werden. Kinder die bereits stehen können, versuchen häufig, in der Karre aufzustehen, um stehend gefahren zu werden. Hierbei besteht die Gefahr, daß das Kind in der Karre umfällt oder sogar aus der Karre herausfällt und sich verletzt. Kinder von etwa 2 bis 4 Jahren können in der Regel bereits gut laufen, wollen aber nicht ständig laufen.

Die Aufgabe der vorliegenden Erfindung besteht deshalb darin, eine Karre anzugeben, in der Kinder stehen können und mit der ein stehendes Kind sicher gefahren werden kann.

Diese Aufgabe wird durch die Erfindung gemäß Anspruch 1 gelöst.

Vorteilhafte und zweckmäßige Weiterbildungen der Aufgabenlösung sind in den Unteransprüchen angegeben.

Die Erfindung schlägt eine neuartige Gestaltung einer Karre vor, nämlich als Stehkarre, auf bzw. in der ein stehendes Kind sicher gefahren werden kann. Eine solche Stehkarre ist besonders geeignet für den Einkaufsbummel, den Spaziergang, den Besuch im Zoo und andere gemeinsame Unternehmungen mit Kindern. Das Auf- und Absteigen ist kindgerecht und unproblematisch möglich und ermöglicht zügiges Fortkommmen.

Die erfindungsgemäße Kinderkarre ist von einfacher Konstruktion und geringem Gewicht, was den Transport bzw. die Handhabung mit einer Hand und das Ein- und Aussteigen in Bus und Bahn ohne fremde Hilfe ermöglicht. Darüber hinaus kann die erfindungsgemäße Stehkarre auch als praktischer Einkaufswagen Verwendung finden, da Taschen einfach angehängt werden können.

Die Erfindung soll nachfolgend anhand der beigefügten Zeichnung, in der ein Ausführungsbeispiel dargestellt ist, näher erläutert werden.

Es zeigt
- Fig. 1: eine erfindungsgemäße Karre in einer schematischen Seitenansicht,
- Fig. 2: eine Ansicht der Karre nach Fig. 1 von hinten und
- Fig. 3: eine Draufsicht auf die Karre nach den Fig. 1 und 2.

Gleiche Bauteile in den Figuren der Zeichnung sind mit den gleichen Bezugszeichen versehen.

Die Zeichnung zeigt eine Kinderkarre 2 zum stehenden Transport von Kindern - nachfolgend Stehkarre genannt.

Die Stehkarre 2 weist ein Fahrgestell 4 mit einem Rahmen 6 und vier Rädern, zwei Vorderrädern 8, 10 und zwei Hinterrädern 12, 14, auf. Auf dem Rahmen 6 ist als Standfläche 15 eine Platte 16 angeordnet. Anstelle einer Platte 16 kann auch ein Gitterrost als Standfläche 15 dienen (nicht dargestellt).

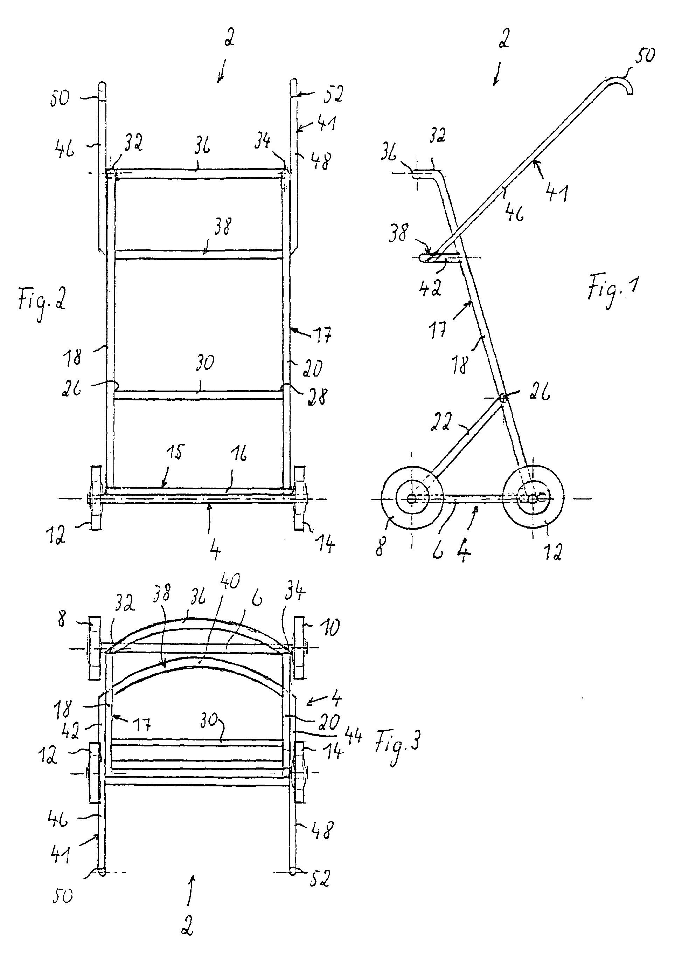

Am Rahmen 6 ist ein Haltegestänge 17 angebracht, welches zwei parallele, beabstandete, vorzugsweise unter einem Winkel < 90° zur Standfläche 15 nach oben und nach vorn geneigte Stangen 18, 20 aufweist, die im hinteren Bereich des Rahmens oder im Bereich der Hinterräder 12, 14 angebracht sind. Die Stangen 18, 20 stützen sich jeweils auf Streben ab, von denen nur eine Strebe (22) dargestellt ist (Fig. 1) und die sich vom vorderen Bereich des Rahmens oder vom Bereich der Vorderräder 8, 10 aus nach hinten unter einem Winkel < 90° zur Standfläche 15 nach oben erstrecken. Im Bereich der Verbindungsstellen 26, 28 zwischen den Streben 22, 24 und den Stangen 18, 20 ist eine die Stangen verbindende Querstrebe 30 angeordnet. Diese Querstrebe 30 kann auch als Sitz benutzt werden.

Die oberen freien Enden 32, 34 der Stangen 18, 20 sind durch eine als Haltestange vorgesehene Querstange 36 miteinander verbunden. Die Querstange 36 kann nach vorn gewölbt ausgebildet sein, wie dies in der Fig. 3 dargestellt ist.

Unterhalb der Halte- bzw. Querstange 36 ist eine weitere als Haltestange dienende, die beiden Stangen 18, 20 verbindende U-förmige Querstange 38 vorgesehen. Der U-Steg 40 dieser Querstange 38 kann nach vorn gewölbt ausgebildet sein, wie dies in der Fig. 3 dargestellt ist.

An dem Haltegestänge 17 ist ein Schiebegestänge 41 für eine die Stehkarre schiebende Person angebracht. Das Schiebegestänge 41 umfaßt zwei Schiebestangen 46, 48, die mit einem Ende an den Schenkeln 42, 44 der U-förmigen Querstange 38 befestigt sind. Die Schiebestangen 46, 48 erstrecken sich unter einem Winkel < 90° zur Standfläche 15 schräg nach hinten und nach oben bis über das hintere Ende des Rahmens 6 oder die Hinterräder 12, 14 und nach oben über die Haltestange 36 hinaus. Die Schiebestangen 46, 48 sind vorzugsweise ferner mit den Stangen 18, 20 verbunden.

Die freien Enden 50, 52 der Schiebestangen 46, 48 sind als Griffe für die schiebende Person ausgebildet. Die Griffe können einfach als nach unten bogenförmig umgebogene freie Enden der Schiebestangen 46, 48 ausgebildet sein, wie dies in der Fig. 1 dargestellt ist.

Die Schiebestangen 46, 48 können nach unten schwenkbar oder teleskopartig ausgebildet sein um die Sperrigkeit bzw. den Raumbedarf der Stehkarre für Transport- und Lagerzwecke zu verringern. Ferner können der Rahmen 6 und die Streben 22 an die Stangen 18, 20 heranklappbar ausgebildet sein, um den Raumbedarf der Stehkarre für Transport- und Lagerzwecke weiter zu verringern.

Anstelle mit vier Rädern kann die Stehkarre auch mit nur drei oder zwei Rädern ausgestattet sein.

Die Stehkarre kann anstelle oder zusätzlich zu den Rädern mit Kufen (nicht dargestellt) ausgestattet sein, die für einen Einsatz im Winter bei Schnee besonders geeignet sind.

## Patentansprüche

1. Kinderkarre mit einem mit Rädern versehenen Rahmen und mit einem Schiebegestänge, **gekennzeichnet durch**
- eine auf dem Rahmen (6) angeordnete Standfläche (15) für Kinder und
- ein am Rahmen (6) angebrachtes, für ein auf der Standfläche (15) stehendes Kind vorgesehenes Haltegestänge (17), an dem das Schiebegestänge (41) befestigt ist.

2. Kinderkarre nach Anspruch 1, **dadurch gekennzeichnet,** daß die Standfläche (15) eine auf dem Rahmen (6) befestigte Platte (16) oder ein auf dem Rahmen befestigtes Gitterrost ist.

3. Kinderkarre nach Anspruch 1, **dadurch gekennzeichnet,** daß das Haltegestänge (17) zwei parallele, beabstandete, vorzugsweise unter einem Winkel < 90° zur Standfläche (15) nach oben und nach vorn geneigte Stangen (18, 20) aufweist, die im hinteren Bereich des Rahmens (6) oder im Bereich der Hinterräder (12, 14) angebracht sind.

4. Kinderkarre nach Anspruch 3, **dadurch gekennzeichnet,** daß sich die Stangen (18, 20) jeweils auf einer Strebe (22) abstützen, die sich vom vorderen Bereich des Rahmens oder vom Bereich der Vorderräder (8, 10) aus nach hinten unter einem Winkel < 90° zur Standfläche (15) nach oben erstrecken.

5. Kinderkarre nach Anspruch 4, **dadurch gekennzeichnet**, daß im Bereich der Verbindungsstellen (26, 28) zwischen den Streben (22) und den Stangen (18, 20) eine die Stangen verbindende Querstrebe (30) angeordnet ist.

6. Kinderkarre nach Anspruch 3, 4 oder 5, **dadurch gekennzeichnet,** daß die oberen freien Enden (32, 34) der Stangen (18, 20) des Haltegestänges (17) durch eine als Haltestange vorgesehene Querstange (36) miteinander verbunden sind.

7. Kinderkarre nach Anspruch 6, **dadurch gekennzeichnet,** daß die Querstange (36) nach vorn gewölbt ausgebildet ist.

8. Kinderkarre nach Anspruch 6 oder 7, **dadurch gekennzeichnet**, daß unterhalb der Halte- bzw. Querstange (36) eine weitere als Haltestange dienende, die beiden Stangen (18, 20) verbindende U-förmige Querstange (38) vorgesehen ist.

9. Kinderkarre nach Anspruch 8, **dadurch gekennzeichnet,** daß der U-Steg (40) der Querstange (38) nach vorn gewölbt ausgebildet ist.

10. Kinderkarre nach einem der vorhergehenden Ansprüche, **dadurch gekennzeichnet**, daß das Schiebegestänge (41) zwei Schiebestangen (46, 48) umfaßt, die mit einem Ende an den Schenkeln (42, 44) der U-förmigen Querstange (38) befestigt sind.

11. Kinderkarre nach Anspruch 10, **dadurch gekennzeichnet**, daß sich die Schiebestangen (46, 48) unter einem Winkel < 90° zur Standfläche (15) schräg nach hinten und nach oben bis über das hintere Ende des Rahmens (6) oder über die Hinterräder (12, 14) und nach oben über die Haltestange (36) hinaus erstrecken.

12. Kinderkarre nach Anspruch 11, **dadurch gekennzeichnet**, daß die Schiebestangen (46, 48) ferner mit den Stangen (18, 20) des Haltegestänges (17) verbunden sind.

13. Kinderkarre nach Anspruch 11 oder 12, **dadurch gekennzeichnet**, daß die freien Enden (50, 52) der Schiebestangen (46, 48) als Griffe für die schiebende Person ausgebildet.

14. Kinderkarre nach Anspruch 13, **dadurch gekennzeichnet**, daß die Griffe als nach unten bogenförmig umgebogene freie Enden der Schiebestangen (46, 48) ausgebildet sind.

15. Kinderkarre nach Anspruch 13 oder 14, **dadurch gekennzeichnet**, daß die Schiebestangen (46, 48) nach unten schwenkbar oder teleskopartig ausgebildet sind.

16. Kinderkarre nach einem der vorhergehenden Ansprüche, **dadurch gekennzeichnet**, daß der Rahmen (6), die Streben (22) und die Stangen (18, 20) zusammenklappbar ausgebildet sind.

17. Kinderkarre nach einem der vorhergehenden Ansprüche, **dadurch gekennzeichnet,** daß anstelle der Räder oder zusätzlich zu den Rädern Kufen vorgesehen sind.
